# EUROPEAN PATENT APPLICATION

(11) **EP 4 156 596 A1**
(43) Date of publication of application: **29.03.2023**
(21) Application number: 22197515.4
(22) Date of filing: 23.09.2022
(51) Int. Cl.: H04L 9/08, H04L 9/32

(54) **SYSTEM AND METHOD FOR TIME-BASED CRYPTOGRAPHY**

(30) Priority: 26.09.2021 US 202163248486 P
(71) Applicant: Zengo Ltd., 6473925 Tel Aviv (IL)
(72) Inventor: SHLOMOVITS, Omer, 4964102 2 Wolf Street, Petach Tikva (IL); BE'ERY, Tal Arieh, 4955030 28 Hanessiim Street, Petach Tikva (IL); VARLAKOV, Denis, 75015 74 Rue des Cévennes, Paris (FR)
(74) Representative: Pearl Cohen Zedek Latzer Baratz UK LLP

(57) **Abstract**

Systems and methods of performing time-based cryptography verification for a server having a trusted execution environment (TEE), including: sending, by the server, a verifiable delay function (VDF) challenge at the TEE to a computing device, solving, by the computing device, the VDF challenge, and blocking, by the server, access to the TEE when the VDF challenge is not complete from the computing device.

## Description

### FIELD OF THE INVENTION

The present invention relates to a data security. More particularly, the present invention relates to systems and methods for secured communication with time-based cryptography verification.

### BACKGROUND

In recent years, securing information has become a never-ending task as malicious attacks constantly develop in their complexity. While there are various solutions for securing data, there is still a need for increased security.

Some information may be shared with particular conditions (e.g., a will that is shared upon someone's death). For information shared between two parties, a first party may generate a secret (e.g., a cryptographic key), known only to the first party. In order to secure the information, the secret should be recovered and/or learned only by the second party in the case that the first party is disabled (e.g., due to server malfunction).

Nowadays, a trusted execution environment (TEE) is an integral part of most modern computing devices. In recent years, TEEs also became available as a service in different cloud computing platforms, such as AWS and Azure

Therefore, it can be desirable to allow secure storage of digital assets with time-based cryptography verification using the TEE environment.

### SUMMARY OF THE INVENTION

There is thus provided, in accordance with some embodiments of the invention, a method of performing time-based cryptography verification for a trusted execution environment (TEE), including: sending, by a server, a verifiable delay function (VDF) challenge, generated at the TEE to a computing device, solving, by the computing device, the VDF challenge, and blocking, by the server, access to the TEE when the VDF challenge is not complete from the computing device.

In some embodiments, at least one first share of a cryptographic key may be generated (e.g., by the server), based on a distributed key generation multi-party computation (MPC) protocol. In some embodiments, at least one second share of the cryptographic key may be generated (e.g., by the computing device), based on the distributed key generation MPC protocol. In some embodiments, the VDF challenge may be associated with the cryptographic key.

In some embodiments, an encrypted message may be sent (e.g., by the server), where the encrypted message includes the cryptographic key to the TEE. In some embodiments, the computing device may verify that the TEE received the cryptographic key. In some embodiments, the computing device may be authenticated (e.g., by the server) with the at least one second share of the cryptographic key. In some embodiments, a message to the TEE may be continuously sent (e.g., by the server), while the VDF challenge is valid.

In some embodiments, a time-based policy may be defined (e.g., by the server) for the TEE. In some embodiments, the TEE may check that solutions to the VDF challenge are received in accordance with the time-based policy.

There is thus provided, in accordance with some embodiments of the invention, a time-based cryptography verification system, including: a server, a trusted execution environment (TEE) configured to generate a verifiable delay function (VDF) challenge, and a computing device, in communication with the server, where the server is configured to: send the VDF challenge to the computing device, and block access to the TEE when the VDF challenge is not complete from the computing device. In some embodiments, the computing device is configured to solve the VDF challenge.

In some embodiments, the server may be configured to generate at least one first share of a cryptographic key, based on a distributed key generation multi-party computation (MPC) protocol. In some embodiments, the computing device may be configured to generate at least one second share of the cryptographic key, based on the distributed key generation MPC protocol.

In some embodiments, the server may be configured to send an encrypted message including the cryptographic key to the TEE. In some embodiments, the computing device may be configured to verify that the TEE received the cryptographic key.

In some embodiments, the server may be configured to authenticate the computing device with the at least one second share of the cryptographic key. In some embodiments, the server may be configured to define a time-based policy for the TEE, and check that solutions to the VDF challenge are received in accordance with the time-based policy. In some embodiments, the server may be configured to continuously send a message to the TEE while the VDF challenge is valid

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings. Embodiments of the invention are illustrated by way of example and not limitation in the figures of the accompanying drawings, in which like reference numerals indicate corresponding, analogous or similar elements, and in which:
Fig. 1 shows a block diagram of a computing device, according to some embodiments of the invention;
Fig. 2 shows a block diagram of a time-based cryptography verification system, according to some embodiments of the invention;
Fig. 3 shows a block diagram of another time-based cryptography verification system with sharing of a cryptographic key, according to some embodiments of the invention;
Fig. 4A shows a flowchart of a method of performing time-based cryptography verification for a server having a trusted execution environment (TEE), according to some embodiments of the invention;
Fig. 4B shows a continuation of the flowchart of Fig. 4A, according to some embodiments of the invention; and
Fig. 5 shows a flowchart of a method of performing time-based cryptography verification for a server having a TEE, according to some embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, and components, modules, units and/or circuits have not been described in detail so as not to obscure the invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes.

Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like. The term set when used herein may include one or more items.

Unless explicitly stated, the method embodiments described herein are not constrained to a particular order or sequence. Additionally, some of the described method embodiments or elements thereof may occur or be performed simultaneously, at the same point in time, or concurrently.

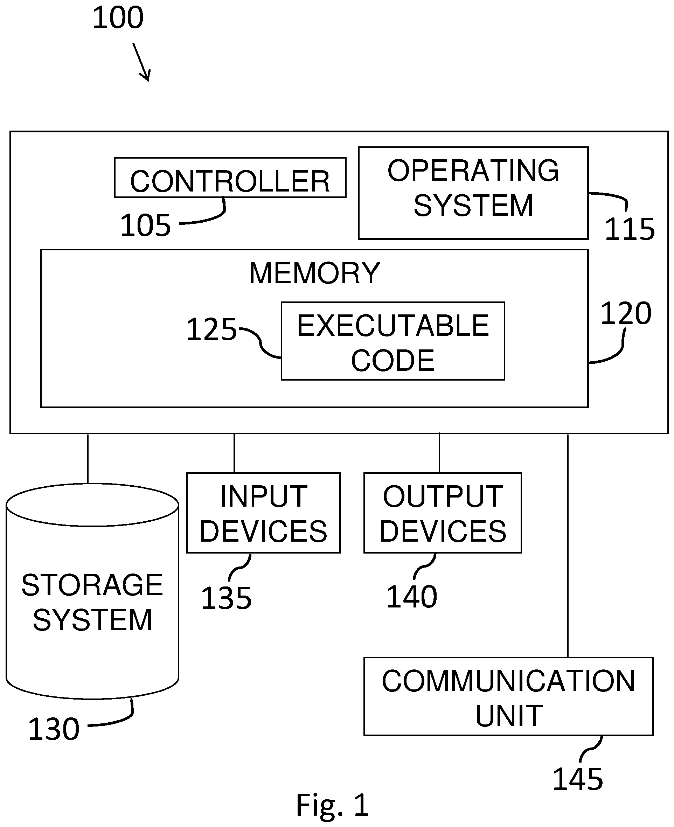

Reference is made to Fig. 1, which is a block diagram of an example computing device, according to some embodiments of the invention. Computing device 100 may include a controller or processor 105 (e.g., a central processing unit processor (CPU), a chip or any suitable computing or computational device), an operating system 115, memory 120, executable code 125, storage 130, input devices 135 (e.g. a keyboard or touchscreen), and output devices 140 (e.g., a display), a communication unit 145 (e.g., a cellular transmitter or modem, a Wi-Fi communication unit, or the like) for communicating with remote devices via a communication network, such as, for example, the Internet.

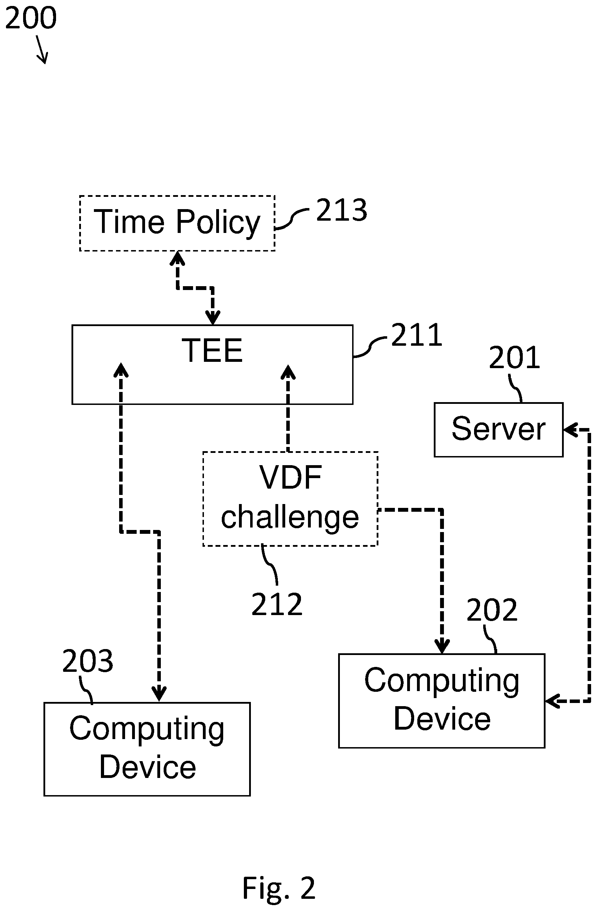

Controller 105 may be configured to execute program code to perform operations described herein. The system described herein may include one or more computing device(s) 100, for example, to act as the various devices or the components shown in Fig. 2. For example, communication system 200 may be, or may include computing device 100 or components thereof.

Operating system 115 may be or may include any code segment (e.g., one similar to executable code 125 described herein) designed and/or configured to perform tasks involving coordinating, scheduling, arbitrating, supervising, controlling or otherwise managing operation of computing device 100, for example, scheduling execution of software programs or enabling software programs or other modules or units to communicate.

Memory 120 may be or may include, for example, a Random Access Memory (RAM), a read only memory (ROM), a Dynamic RAM (DRAM), a Synchronous DRAM (SD-RAM), a double data rate (DDR) memory chip, a Flash memory, a volatile memory, a non-volatile memory, a cache memory, a buffer, a short term memory unit, a long term memory unit, or other suitable memory units or storage units. Memory 120 may be or may include a plurality of similar and/or different memory units. Memory 120 may be a computer or processor non-transitory readable medium, or a computer non-transitory storage medium, e.g., a RAM.

Executable code 125 may be any executable code, e.g., an application, a program, a process, task or script. Executable code 125 may be executed by controller 105 possibly under control of operating system 115. For example, executable code 125 may be a software application that performs methods as further described herein. Although, for the sake of clarity, a single item of executable code 125 is shown in Fig. 1, a system according to embodiments of the invention may include a plurality of executable code segments similar to executable code 125 that may be stored into memory 120 and cause controller 105 to carry out methods described herein.

Storage 130 may be or may include, for example, a hard disk drive, a universal serial bus (USB) device or other suitable removable and/or fixed storage unit. In some embodiments, some of the components shown in Fig. 1 may be omitted. For example, memory 120 may be a non-volatile memory having the storage capacity of storage 130. Accordingly, although shown as a separate component, storage 130 may be embedded or included in memory 120.

Input devices 135 may be or may include a keyboard, a touch screen or pad, one or more sensors or any other or additional suitable input device. Any suitable number of input devices 135 may be operatively connected to computing device 100. Output devices 140 may include one or more displays or monitors and/or any other suitable output devices. Any suitable number of output devices 140 may be operatively connected to computing device 100. Any applicable input/output (I/O) devices may be connected to computing device 100 as shown by blocks 135 and 140. For example, a wired or wireless network interface card (NIC), a universal serial bus (USB) device or external hard drive may be included in input devices 135 and/or output devices 140.

Embodiments of the invention may include an article such as a computer or processor non-transitory readable medium, or a computer or processor non-transitory storage medium, such as for example a memory, a disk drive, or a USB flash memory, encoding, including or storing instructions, e.g., computer-executable instructions, which, when executed by a processor or controller, carry out methods disclosed herein. For example, an article may include a storage medium such as memory 120, computer-executable instructions such as executable code 125 and a controller such as controller 105. Such a non-transitory computer readable medium may be for example a memory, a disk drive, or a USB flash memory, encoding, including or storing instructions, e.g., computer-executable instructions, which when executed by a processor or controller, carry out methods disclosed herein.

The storage medium may include, but is not limited to, any type of disk including, semiconductor devices such as read-only memories (ROMs) and/or random-access memories (RAMs), flash memories, electrically erasable programmable read-only memories (EEPROMs) or any type of media suitable for storing electronic instructions, including programmable storage devices. For example, in some embodiments, memory 120 is a non-transitory machine-readable medium.

A system according to embodiments of the invention may include components such as, but not limited to, a plurality of central processing units (CPUs), a plurality of graphics processing units (GPUs), or any other suitable multi-purpose or specific processors or controllers (e.g., controllers similar to controller 105), a plurality of input units, a plurality of output units, a plurality of memory units, and a plurality of storage units. A system may additionally include other suitable hardware components and/or software components.

In some embodiments, a system may include or may be, for example, a personal computer, a desktop computer, a laptop computer, a workstation, a server computer, a network device, or any other suitable computing device. For example, a system as described herein may include one or more facility computing device 100 and one or more remote server computers in active communication with one or more facility computing device 100 such as computing device 100, and in active communication with one or more portable or mobile devices such as smartphones, tablets and the like.

In some embodiments, a system is provided for secure storage of digital assets (e.g., such as a digital safe to store digital secrets) with a time-based lock, using a trusted execution environment and time-based cryptography. For example, such a system may allow recovery of a digital asset (or secret) by a computing device of the system (e.g., when a server is not available for communication). A trusted execution environment (TEE) is generally a secure environment of a processor (e.g., such as controller 105) for confidential computing. The TEE ensures that data loaded inside to be protected with respect to confidentiality and integrity, and therefore the TEE allows to generate, keep and manage access to secrets since an outsider cannot learn anything about computation that happens inside the secure environment. In some cases, the TEE may generate their own keys.

Time-based cryptography is based on computationally complex functions that may be solved in a finite and well-defined timeframe. By running time-based cryptography inside a TEE, a secure time feature may be introduced that may be utilized as a safety mechanism in securing information. In some embodiments, the time-based TEE may release a secret only after a given time duration has passed.

Reference is now made to Fig. 2, which shows a block diagram of a time-based cryptography verification system 200, according to some embodiments of the invention. In Fig. 2, hardware elements are indicated with a solid line and the direction of arrows indicate a direction of information flow between the hardware elements.

The time-based cryptography verification system 200 may include a server 201 that is in communication with a computing device 202 (e.g., such as computing device 100 shown in Fig. 1). The communication between the server 201 and the computing device 202 may be wired or wireless, for instance over the Internet.

In some embodiments, the time-based cryptography verification system 200 may operate with the server 201 and a plurality of computing devices, such as computing device 202 and second computing device 203, where the same server 201 communicates separately with each of the computing devices.

In some embodiments, the time-based cryptography verification system 200 may include a trusted execution environment (TEE) 211, for instance implemented or executed on a processor and/or server and/or controller (e.g., such as controller 105 shown in Fig. 1). For example, the TEE 211 may be implemented on a second server, or operated by a different cloud computing provider.

The server 201 and/or the TEE 211 may generate a verifiable delay function (VDF) 212 challenge, and accordingly send the VDF challenge 212 to the computing device 202 for solving. In case that the computing device 202 returns the solved VDF challenge 212 to the server 201, the server 201 may accordingly verify or authenticate the computing device 202. For example, the computing device 202 may return the solved VDF challenge 212 to the TEE 211 at the server 201 in order to verify that the VDF challenge 212 is correctly solved. The VDF challenge 212 includes a time parameter and the solution for the VDF challenge 212 guarantees that this time has actually passed, thus the server 201 may verify that a sufficient time 'T' passed based on the received solution.

According to some embodiments, the server 201 may utilize the TEE 211 for maintaining data table, for instance where the data table is to be accessed and viewed only by the TEE 211. The TEE 211 may further generate the VDF challenge 212, and verify the VDF solution.

According to some embodiments, the TEE 211 may include the VDF challenge 212 as a cryptography time-based storage (e.g., to store secret information). In order to retrieve information from such a cryptography time-based storage as described in Fig. 2, a predefined time duration need to pass from a predefined event (e.g., generation of the VDF challenge 212).

In some embodiments, the server 201 may communicate with the computing device 202, where each party may generate a secret key for sharing of (secret) data. The system 200 ensures that the computing device 202 may be able to recover the secret key of the server 201 in case the server 201 becomes unavailable. In case that the TEE 211 operates on a different second server, the server 201 may provide the TEE 211 with its secret key.

In some embodiments, in case of multiple party computation (MPC) scheme, the computing device 202 may verify with the second server that such a secret exists, where the second server may check that the computing device 202 is eligible to extract the secret from the server 201. Eligibility of the computing device 202 may be based on a check done by the TEE 211 that the server 201 is not available for 'T' time. This check may be carried out by the TEE 211 generating the VDF challenge 212 and at the same time communicating (or accepting pings) from the server 201. If no new communication is established (or no new pings arrive) between the time the VDF challenge 212 was created to the time a solution to the VDF challenge 212 is received by the TEE 211 (any party may solve the VDF challenge 212, but the computing device 202 has the most interest), the computing device 202 may be able to ask the TEE 211 for the secret key and get it, even if the server 201 is down.

In some embodiments, the TEE 211 may periodically receive a measurable signal or message from the server 201 that generated the secret information. As long as the message arrives within the required period of time the storage remains locked. Once the signal or message is not received for a duration beyond a predefined threshold, the storage may accordingly be opened for sharing of the information.

The TEE 211 may operate analogously to a vault, where only the server 201 may place secret information (e.g., cryptographic keys) within the vault. If a user operating the computing device 202 wants to open the vault, two locks must be unlocked: authentication of the computing device 202, and confirmation that the server 201 was inactive for at least a predefined time period 'T'. For example, thereby releasing secret information within the TEE 211 if the server 201 is no longer active.

The VDF is a function utilized in cybersecurity, whose evaluation may require running a given number of sequential steps, yet the result may be efficiently verified. Thus, the VDF challenge 212 may be generated by the server as a timing condition for the computing device 202 since a known time period is required in order to compute the VDF challenge 212 by the computing device 202. Since operation of verification is faster than solving the VDF, it may be sufficient to verify the VDF challenge, rather than show a complete solution.

A VDF may be defined by the following set of algorithms: generate public parameters, generate challenge 'C', solve VDF(C), get solution 'S' and accordingly verify (C, S). Additional parameters for VDF may include a time parameter 'T' that determines the time it takes to solve the VDF challenge. For example, the VDF challenge 212 may be generated in the secure environment and/or with public parameters given by the server 201.

In some embodiments, the server 201 may define a time-based policy 213 for the TEE 211. For example, the server 201 may define the time-based policy 213 such that the server 201 is inactive for a predefined time period (e.g., one month).

In some embodiments, the server 201 may block access to the TEE 211 when the VDF challenge 212 is not complete by the computing device 202. The computing device 202 may be configured to solve the VDF challenge 212. The server 201 may validate the solution by the computing device 202, such that information stored on the TEE 211 (e.g., a secret), may be accessible and/or shared with the computing device 202 only if the VDF challenge 212 is complete (e.g., the VDF challenge 212 being solved by the computing device 202).

In some embodiments, the server 201 may continuously send a message to the TEE 211 while the VDF challenge 212 is valid. In some embodiments, the server 201 may continuously send a message (e.g., a "keep alive" message) during the time period between the generation of the VDF challenge 212, and the solution of the VDF challenge 212, such that in this time period the information stored on the TEE 211 may not be shared as long as this message is received.

According to some embodiments, the TEE 211 may be deployed on a computing device separate from the server 201, while the TEE 211 is operated by the server 201. For example, the server 201 and TEE 211 may be implemented on different cloud computing services, such that even if the server 201 malfunctions or is offline, the TEE 211 may still be active for recovery of the information.

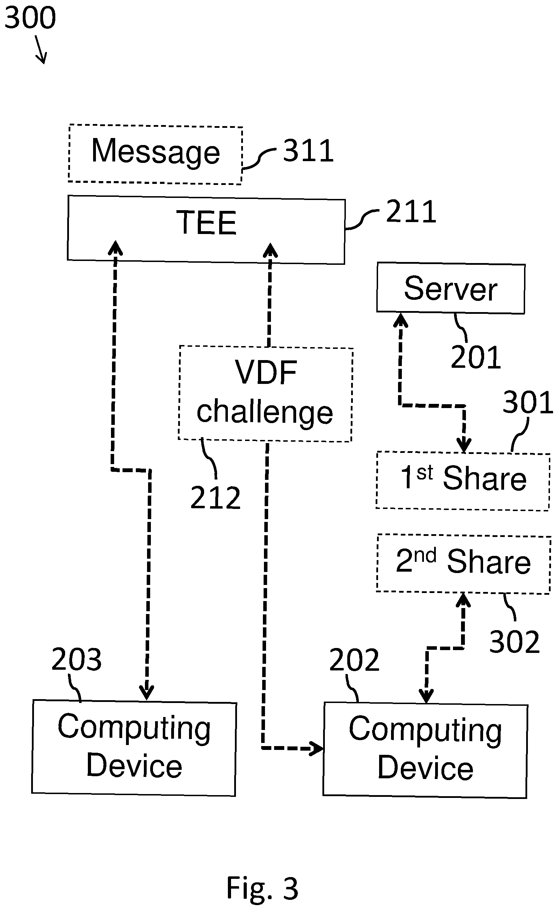

Reference is now made to Fig. 3, which shows a block diagram of another time-based cryptography verification system 300 with sharing of a cryptographic key, according to some embodiments of the invention. In Fig. 3, at least some elements are similar to corresponding elements from Fig. 2, such as the server 201 and the computing device 202.

In some embodiments, the server 201 may initiate or setup the TEE 211 with public parameters to enable secure information storage with the system 300. The server 201 may generate at least one first share 301 of a cryptographic key, based on a distributed key generation multi-party computation (MPC) protocol. The computing device 202 may generate a corresponding at least one second share 302 of the cryptographic key, based on the distributed key generation MPC protocol. Accordingly, once the VDF challenge 212 is computed and/or completed by the computing device 202, the TEE 211 may receive the cryptographic key.

In some embodiments, the server 201 may generate a server's secret share 'SS_S_i' that is known only to the server and also the joint public key 'PK' as {SS_S_i, PK}. The computing device 202 may accordingly generate a secret share 'SS_C_i' as {SS_C_i, PK}. Thus, the following equation holds: SS_S_i ^{∗} SS_C_i ^{∗} G = PK, where 'G' stands for the group generator for cryptographic keys. For example, the cryptographic keys may be generated based on elliptic-curve cryptography (ECC).

In some embodiments, the relation between shares and cryptographic key may be SS_S_i ^{∗} G + SS_C_i ^{∗} G = PK, or a similar linear relation.

According to some embodiments, the server 201 may authenticate the computing device 202 with the at least one second share 302 of the cryptographic key. In some embodiments, the secret information kept in the storage by the system 300 may be of such structure that it is possible for all parties (or for specific computing devices) to validate that the secret information actually exists.

In some embodiments, the server 201 may send an encrypted message 311 that includes the cryptographic key to the TEE 211. In some embodiments, the computing device 202 may verify that the TEE 211 received the cryptographic key.

According to some embodiments, the server 201 and the computing device 202 may generate share 301, 302 (respectively) of the cryptographic key, based on the distributed key generation MPC protocol. In case that the computing device 202 chooses to opt in, the server 201 may send to the TEE 211 an encrypted message 311 including the information for (i, SS_S_i, PK).

In some embodiments, the computing device 202 may verify the existence of 'SS_S_i' in the TEE 211 by sending the (encrypted) message 311 as {verify, i, PK} to the server 201. The TEE 211 may accordingly reply by sending a proof of knowledge of PK_S_i = SS_S_i ^{∗} G.

In case the computing device 202 requires the 'SS_S_i' (e.g., as the first share 301), the system 300 may require that the computing device 202 pass authentication as well as that the server 201 is compliant with a time-based policy (e.g., such as policy 213 shown in Fig. 2).

In some embodiments, the computing device 202 may pass authentication by sending PK_C_i = SS_C_i ^{∗} G to the server 201 as proof of knowledge. In case that authentication of the computing device 202 succeeds, the TEE 211 may send back the VDF challenge 212 for instance defined with a time parameter that is equivalent to some clock time 'T'. The time parameters may vary between different computing devices per their time-based policy, for instance solving a one-month challenge may indicate that the secret information is stuck for a long time before it can be used. However, it also makes it less likely that an attacker is able to take advantage of short DoS attacks on the server such that it makes the recovery more robust. In some embodiments, the time-based policy on the server 201 may be dynamic and also change.

After the computing device 202 is authenticated by the server 201, the computing device 202 may send the solution to the VDF challenge 212, for instance along with the public cryptographic key. In some embodiments, the TEE 211 may include the time parameter 'T' that is associated with the VDF challenge 212, where it has to take at least time 'T' in order to solve the VDF challenge 212.

In some embodiments, during time 'T' from sending of the VDF challenge 212, the TEE 211 may receive a signal from the server 201 and drop the challenge and/or reject any future solution. For example, the signal received from the server 201 may be a keep alive signal sent continuously every second. In case that the TEE 211 does not receive a signal from the server 201, when presented with a solution from the computing device 202, the TEE 201 may send back the 'SS_S_i' encrypted under the public key (e.g., such as the first share 301).

According to some embodiments, the system 200 and/or system 300 may provide a "proof of asset", where the server 201 may ping the TEE 211 (e.g., with a predefined message) over a predefined period of time (e.g., once every second). Once a valid computing device 202 requests to share the secret information, a VDF challenge 212 may be generated with a pre-configured time parameter 'T' (e.g., for one month). If a ping from the server 201 arrives prior to the VDF solution from the computing device 202, the challenge and sharing request may be accordingly cancelled. In case that no ping arrives prior to the VDF challenge 212 is solved, the TEE 211 may safely determine that the server 201 was inactive for at least 'T' time and release the first share 301.

The proof of asset protocol may be a zero knowledge proof of knowledge (ZKPOK) of a discrete log. This proof may have a public key as the public statement ('PK') and the prover party may prove they knows 'SK' such that PK = SK ^{∗} G. In the case of two party MPC for example, this may be very useful since the computing device 202 knows already 'PK' of the server 201 from the key generation protocol. Thus, if the TEE 211 produces such ZKPOK, it may be considered a proof that the server holds its local secret key.

In some embodiments, the proof of asset protocol may verify that the asset is indeed "within the vault" without revealing any secret information or further details on the actual asset.

According to some embodiments, the system 200 and/or system 300 are not constrained to a cryptographic system (e.g., a blockchain) and may be used for any two-party system that requires recovery by way of one party learning the secret of the counterparty after a finite amount of time (e.g., seconds, weeks, years), with or without conditioning about the counterparty availability.

In some embodiments, both shares 301, 302 of the cryptographic key may be required in order to access the (secret) information, and in case that the server 201 is unavailable, the at least one first share 301 of a cryptographic key needs to be recovered by the computing device 203. The server 201 may be unavailable, for instance due to malfunction (e.g., when could computing is offline), due to a cyber-attack (e.g., denial of service (DoS) attack), or if the organization operating the server 201 ceases to exist.

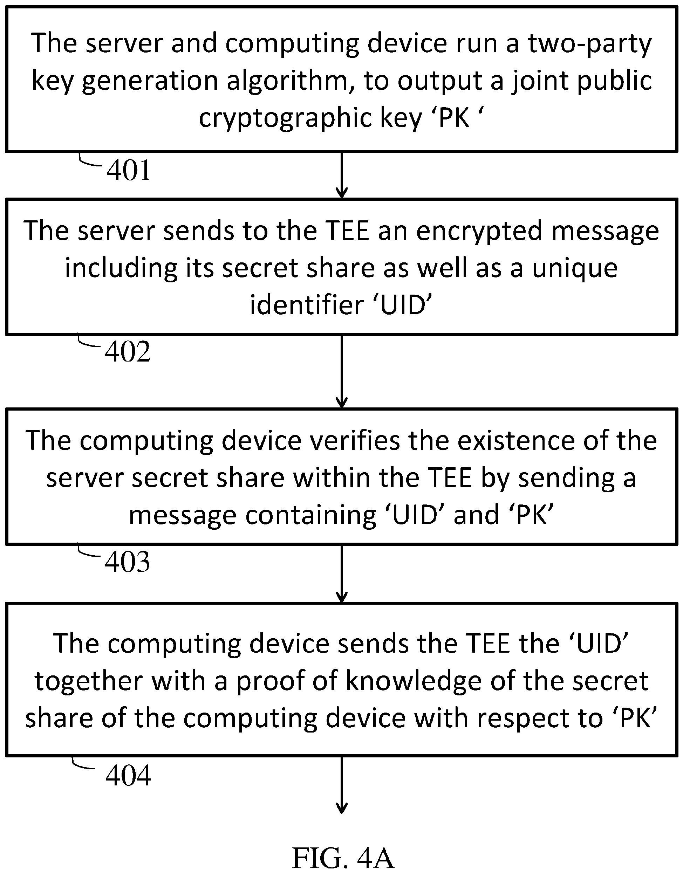

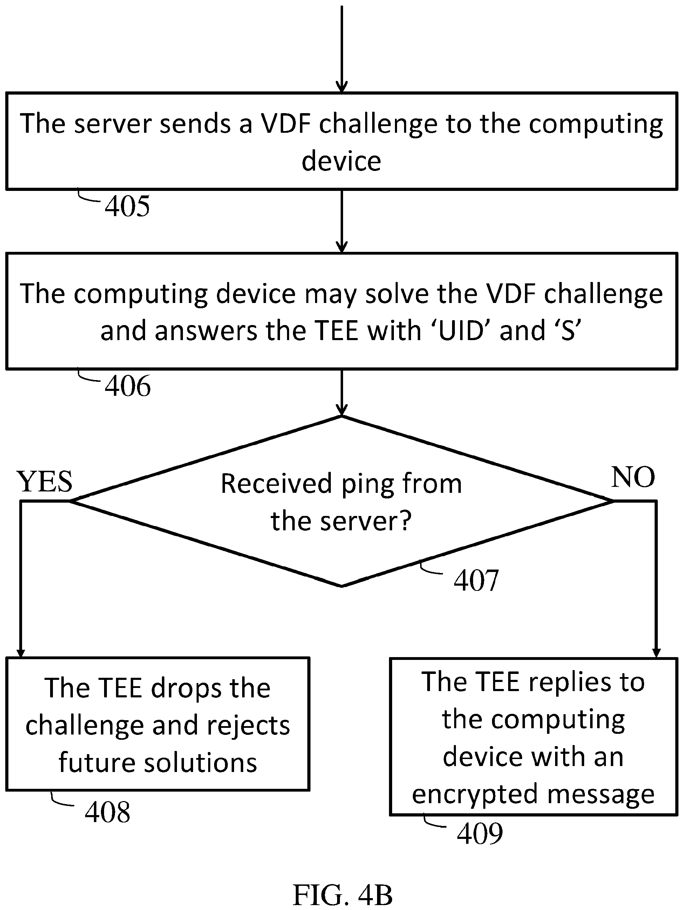

Reference is now made to Figs. 4A-4B, which shows a flowchart of a method of performing time-based cryptography verification for a server having a TEE, according to some embodiments of the invention. Some elements described in Figs. 4A-4B, may be similar to corresponding elements from Fig. 2 and/or Fig. 3.

In Step 401, the server and the computing device may run a two-party key generation algorithm, to output a joint public cryptographic key 'PK'. For example, the server may generate the first share of the cryptographic key, while the computing device may generate the second share of the cryptographic key.

In Step 402, the server may send to the TEE an encrypted message including its secret share as well as a unique identifier 'UID'. Thus, the secret share may be securely stored within the TEE (e.g., as in a locked vault). In some embodiments, the encryption key for the encrypted message may be generated by the TEE.

In Step 403, the computing device may at any point in time verify the existence of the server secret share within the TEE by sending a message containing 'UID' and 'PK'. For example, the computing device may receive the 'UID' from the server in a separate request. In some embodiments, the TEE may reply to the verification request from the computing device, by sending a zero-knowledge proof of knowledge of the server secret share.

In Step 404, the computing device may be authenticated to the server (e.g., to unlock the vault) by sending the TEE the 'UID' together with a zero-knowledge proof of knowledge of the secret share of the computing device with respect to 'PK'. In Step 405, if the authentication of the computing device passes, the TEE may send back a new VDF challenge 'C' for the computing device to solve.

In Step 406, the computing device may solve the VDF challenge and answers the TEE with 'UID' and 'S'. In some embodiments, the computing device may delegate solving the VDF challenge to another party (e.g., another computing device).

In case that the server sends a ping to the TEE, in Step 407, the TEE may drop the challenge and reject any future solution in Step 408. For example, in case that the TEE receives a ping from the server before a valid solution is received from the computing device (e.g., indicating that the server is operational and functioning).

In case that the server does not send a ping to the TEE, in Step 407, the TEE may reply to the computing device with encrypted message (e.g., encrypted under the client key) in Step 409. The encrypted message may include the server share, which may then be decrypted locally by the computing device. For example, in case that the TEE receives a valid solution 'S' from the computing device prior to a ping from the server.

According to some embodiments, the TEE may store a cryptographic key corresponding to an encrypted secret share that may be stored locally by the computing device instead of being stored at the server. Thus, there is no need for two shares of the cryptographic key, where a first share is stored at the server and a second share is stored at the computing device.

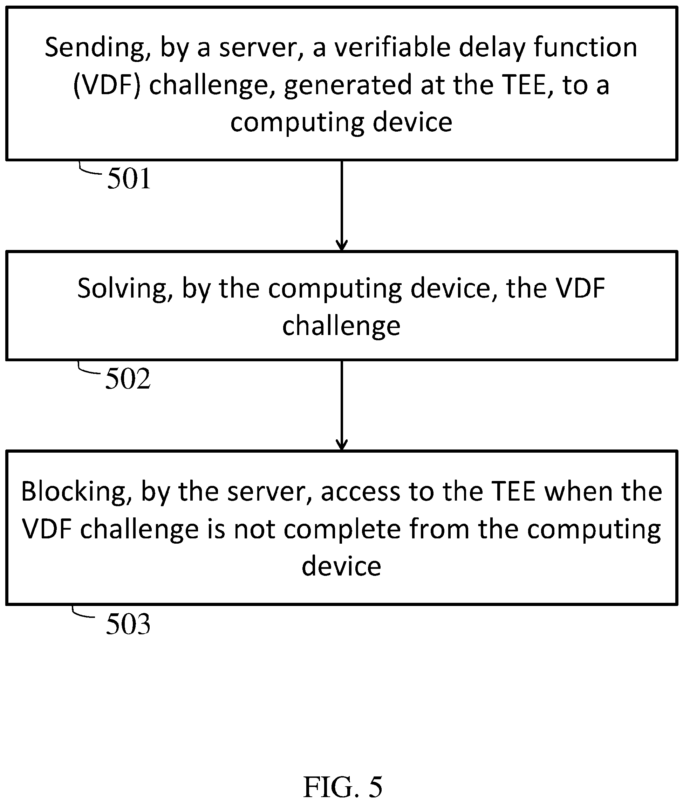

Reference is now made to Fig. 5, which shows a flowchart of a method of performing time-based cryptography verification for a server having a TEE, according to some embodiments of the invention. Some elements described in Fig. 5, may be similar to corresponding elements from Fig. 2 and/or Fig. 3.

In Step 501, the server may send a verifiable delay function (VDF) challenge at the TEE to a computing device.

In Step 502, the computing device may solve the VDF challenge.

In Step 503, the server may block access to the TEE when the VDF challenge is not complete from the computing device.

In some embodiments, the server may generate at least one first share of a cryptographic key, based on a distributed key generation multi-party computation (MPC) protocol, and the computing device may generate at least one second share of the cryptographic key, based on the distributed key generation MPC protocol. In some embodiments, the VDF challenge may be associated with the cryptographic key.

While certain features of the invention have been illustrated and described herein, many modifications, substitutions, changes, and equivalents may occur to those skilled in the art. It is, therefore, to be understood that the appended claims are intended to cover all such modifications and changes.

Various embodiments have been presented. Each of these embodiments may of course include features from other embodiments presented, and embodiments not specifically described may include various features described herein.

## Claims

1. A method of performing time-based cryptography verification for a trusted execution environment (TEE), the method comprising:
sending, by a server, a verifiable delay function (VDF) challenge, generated at the TEE, to a computing device;
solving, by the computing device, the VDF challenge; and
blocking, by the server, access to the TEE when the VDF challenge is not complete from the computing device.

2. The method of claim 1, comprising:
generating, by the server, at least one first share of a cryptographic key, based on a distributed key generation multi-party computation (MPC) protocol; and
generating, by the computing device, at least one second share of the cryptographic key, based on the distributed key generation MPC protocol,
wherein the VDF challenge is associated with the cryptographic key.

3. The method of claim 2, comprising sending, by the server, an encrypted message comprising the cryptographic key to the TEE.

4. The method of claim 2, comprising verifying, by the computing device, that the TEE received the cryptographic key.

5. The method of claim 2, comprising authenticating, by the server, the computing device with the at least one second share of the cryptographic key.

6. The method of claim 1, comprising:
defining, by the server, a time-based policy for the TEE; and
checking, by the TEE, that solutions to the VDF challenge are received in accordance with the time-based policy.

7. The method of claim 1, comprising continuously sending, by the server, a message to the TEE while the VDF challenge is valid.

8. A time-based cryptography verification system, the system comprising:
a server;
a trusted execution environment (TEE), configured to generate a verifiable delay function (VDF) challenge; and
a computing device, in communication with the server,
wherein the server is configured to:
send the VDF challenge to the computing device; and
block access to the TEE when the VDF challenge is not complete from the computing device; and
wherein the computing device is configured to solve the VDF challenge.

9. The system of claim 8, wherein the server is configured to generate at least one first share of a cryptographic key, based on a distributed key generation multi-party computation (MPC) protocol, and wherein the computing device is configured to generate at least one second share of the cryptographic key, based on the distributed key generation MPC protocol.

10. The system of claim 8, wherein the server is configured to send an encrypted message comprising the cryptographic key to the TEE.

11. The system of claim 8, wherein the computing device is configured to verify that the TEE received the cryptographic key.

12. The system of claim 8, wherein the server is configured to authenticate the computing device with the at least one second share of the cryptographic key.

13. The system of claim 8, wherein the server is configured to define a time-based policy for the TEE, and check that solutions to the VDF challenge are received in accordance with the time-based policy.

14. The system of claim 8, wherein the server is configured to continuously send a message to the TEE while the VDF challenge is valid.
